Europäisches Patentamt

(19) European Patent Office

Office européen des brevets

(11) EP 0 866 457 A1

(12) EUROPEAN PATENT APPLICATION

(43) Date of publication:
23.09.1998 Bulletin 1998/39

(51) Int. Cl.⁶: G11B 21/21, G11B 5/60

(21) Application number: 98103430.9

(22) Date of filing: 27.02.1998

(84) Designated Contracting States:
AT BE CH DE DK ES FI FR GB GR IE IT LI LU MC
NL PT SE
Designated Extension States:
AL LT LV MK RO SI

(30) Priority: 18.03.1997 JP 65126/97
30.05.1997 JP 142309/97

(71) Applicant: FUJITSU LIMITED
Kawasaki-shi, Kanagawa 211-8588 (JP)

(72) Inventors:
• Iwamoto, Tohru
Kawasaki-shi, Kanagawa 211-8588 (JP)
• Handa, Yoichi
Kawasaki-shi, Kanagawa 211-8588 (JP)

• Wakamatsu, Hiroaki
Kawasaki-shi, Kanagawa 211-8588 (JP)
• Sawai, Atsushi
Kawasaki-shi, Kanagawa 211-8588 (JP)
• Syobuda, Fumio
Kawasaki-shi, Kanagawa 211-8588 (JP)
• Sasaki, Yuji
Kawasaki-shi, Kanagawa 211-8588 (JP)

(74) Representative:
Seeger, Wolfgang, Dipl.-Phys.
SEEGER & SEEGER
Patentanwälte & European Patent Attorneys
Georg-Hager-Strasse 40
81369 München (DE)

(54) Levitation type head for accessing a zone-texture storage medium and a disk apparatus having the levitation type head

(57) A head includes a first air bearing surface (131, 132) which is provided adjacent to a contact-start-stop zone (2) of a storage medium (1) and extends in a rotational direction (A) of the medium when the head (113, 200, 250) confronts the medium. The first air bearing surface is levitated above a given levitational height for the contact-start-stop zone when the medium is rotated and the head accesses a data zone (3) of the medium. A second air bearing surface (131, 133) is provided apart from the contact-start-stop zone and extends parallel to the first air bearing surface when the head confronts the medium (1). The second air bearing surface is levitated above a given levitational height for the data zone when the medium is rotated and the head accesses the data zone. The first and the second air bearing surfaces (131, 132, 133) are provided in an asymmetric configuration such that the head (113, 200, 250) is held in an inclined condition around a horizontal axis parallel to the rotational direction (A) to avoid contact with the medium when the head accesses a nearest area of the data zone (3) to the contact-start-stop zone (2).

FIG. 1

## Description

BACKGROUND OF THE INVENTION

(1) Field of the Invention

The present invention relates to a levitation type head for accessing a zone-texture storage medium, and a disk apparatus having the levitation type head which reads data from and/or writes data to a zone-texture storage medium, wherein the storage medium has a data zone and a contact-start-stop (CSS) zone, and a given levitational height for the CSS zone is provided to be larger than a given levitational height for the data zone.

The amount of information processed by the software of recent multimedia systems has greatly increased. In order to keep up with this trend, there is a demand for a disk drive which requires a small size and is capable of recording or reproducing a larger amount of information to a recoding medium, such as a magnetic disk.

It is required to increase a recording capacity of the storage medium accessed by a levitation type head of the disk drive in order to meet the above demand. A conceivable method for increasing the recording capacity of the storage medium is to reduce the distance from the disk surface to the head levitated when data is read from or written to the disk. However, if the distance between the disk surface and the head is excessively small, the head is likely to contact the disk when data is read or written by the head. If the head crashes against the disk, the head may be damaged or a flaw in the disk surface may be produced. To avoid the problem of head crash, it is necessary to make the surface of the storage medium as smooth as possible.

However, if the disk surface is made too smooth, the head is more likely to contact or stick to the storage medium during the reading or writing of data to the disk. It is desirable to resolve the problem of head crash for the levitation type head even when the disk surface is made smooth.

(2) Description of the Related Art

Concerning a conventional magnetic disk which is accessed by a conventional levitation type magnetic head, a levitational height of the magnetic head from the disk surface is set to be constant with respect to the whole disk from the innermost area to the outermost area.

In order to meet the recent requirement for an increased recording capacity of a magnetic disk, it is required to make the surface of the magnetic disk as smooth as possible and reduce the levitational height of the magnetic head for the magnetic disk. However, if the disk surface is made too smooth, the magnetic head is more likely to contact or stick to the magnetic disk during the reading or writing of data to the disk.

On the other hand, the magnetic disk generally has a data zone and a contact-start-stop zone (hereinafter called a CSS zone). The data zone is provided for a levitation type magnetic head to read data from or write data to the magnetic disk. The CSS zone is provided for the levitation type magnetic head to be positioned there when the magnetic head does not perform the reading or writing of data with respect to the disk.

In order to avoid the problem of contact of the magnetic head with the magnetic disk even if the disk surface is made smooth, a zone-texture magnetic disk in which a surface of the CSS zone is made rougher than a surface of the data zone and the given levitational height of the magnetic head for the CSS zone is increased to be higher than that for the conventional magnetic disk is proposed.

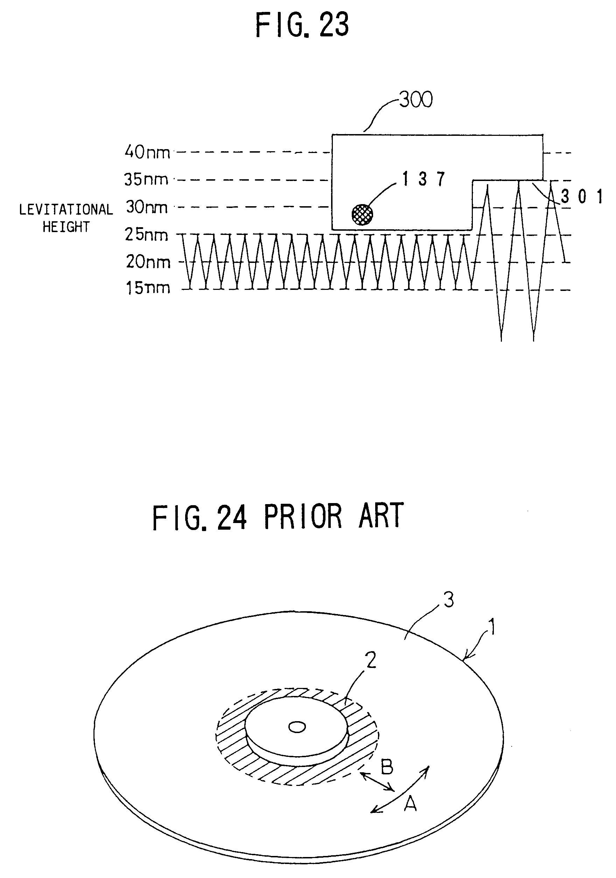

FIG. 24 shows a zone-texture magnetic disk 1 mentioned above. The zone-texture magnetic disk 1 is a magnetic disk proposed for an increased recording capacity. As shown in FIG. 24, the magnetic disk 1 has a contact-start-stop (CSS) zone 2 at an inner location of the disk 1 and a data zone 3 at an outer location of the disk 1. The CSS zone 2 is surrounded by the data zone 3. Small textures are formed on the surface of the CSS zone 2, and the surface roughness of the CSS zone 2 is made such that a magnetic head hardly contacts or sticks to the disk 1 in the CSS zone 2. The surface of the data zone 3 is formed to be relatively flat and smooth, and the magnetic head is likely to near the surface of the disk 1 in the data zone 3.

In the zone-texture magnetic disk 1 of FIG.24, when the reading or writing of data is not performed by the magnetic head, the magnetic head is positioned in the CSS zone 2. The given levitational height for the CSS zone 2 is increased, and the magnetic head positioned in the CSS zone 2 hardly contacts the disk 1. When the magnetic head is positioned in the data zone 3, the reading or writing of data with the disk 1 is performed by the magnetic head. The given levitational height for the data zone 3 is smaller than that for the CSS zone 2. The magnetic head positioned in the data zone 3 closely nears the surface of the disk 1, and the magnetic head can perform the reading or writing of data with the magnetic disk 1 at a high output level.

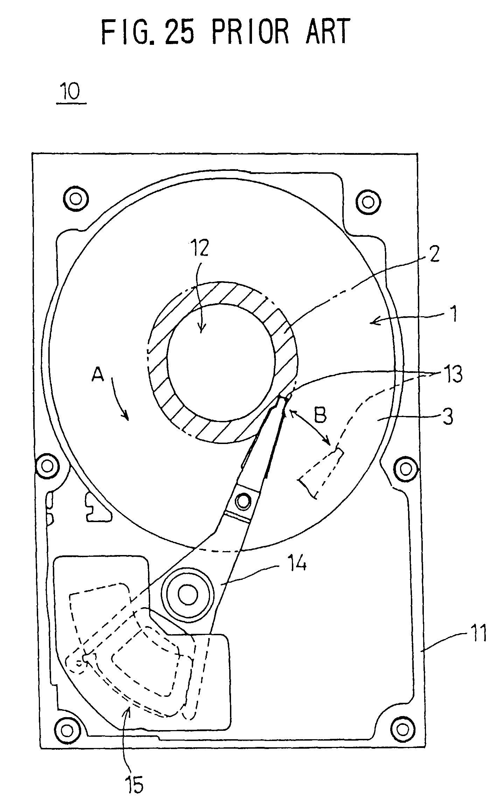

FIG. 25 shows a conventional disk apparatus 10 having a magnetic head which accesses the zone-texture magnetic disk of FIG. 24.

In the disk apparatus 10 of FIG. 25, the zone-texture magnetic disk 1 is rotatably held by a spindle motor 12 which is fixed to a base 11. When the spindle motor 12 is operated, the zone-texture magnetic disk 1 is rotated in a rotational direction (indicated by the arrow "A" in FIG. 25) by the spindle motor 12. A magnetic head 13 is fixed to a leading edge of an arm 14. The arm 14 is rotatably held on the base 11 at a supporting portion. A voice coil motor 15 is fixed to the base 11 and arranged at the other end of the arm 14. When the voice coil motor 15 is operated, the magnetic head 13 at the leading edge of the arm 14 is rotated around the supporting portion in a radial direction (indicated by the arrow "B" in FIG. 25) of the disk 1 by the voice coil motor 15.

The magnetic head 13 is levitated from the surface of the disk 1 with a flow of air produced on the surface of the disk 1 by the rotation of the spindle motor 12. The disk 1 is accessed by the magnetic head 13 being levitated.

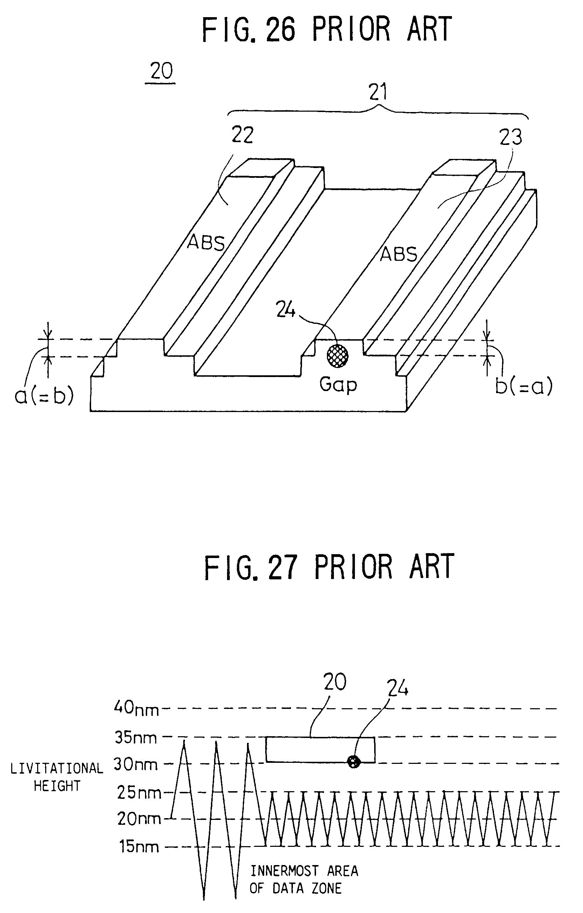

FIG. 26 is a perspective view of a conventional magnetic head 20. As shown in FIG. 26, the conventional magnetic head 20 has air bearing surfaces (hereinafter called ABS) 21 formed therein. The ABS 21 are formed on an inner rail 22 and an outer rail 23 which are leveled with each other. When the conventional magnetic head 20 confronts the zone-texture magnetic disk 1, the inner rail 22 is located near the CSS zone 2 and extends in the rotational direction "A" of the disk 1 while the outer rail 23 is located near the data zone 3 and extends in the rotational direction "A" of the disk 1.

The conventional magnetic head 20 includes a gap 24 which serves to perform the reading or writing of data with the disk 1. The gap 24 is formed on an end surface of the outer rail 23, and the end surface of the outer rail 23 extends in the radial direction "B" of the disk 1.

It should be noted that, in the conventional magnetic head 20 of FIG. 26, the ABS 21 are formed such that a height "a" of the inner rail 22 and a height "b" of the outer rail 23 are equal to each other (a = b). When the conventional magnetic head 20 is levitated from and slides over the disk 1, the inner rail 22 and the outer rail 23 are held in a horizontal condition and in parallel to the surface of the disk 1.

There is also another zone-texture magnetic disk which is different from the zone-texture magnetic disk 1 of FIG. 24. This zone-texture magnetic disk has the CSS zone 2 at an outer location of the disk and the data zone 3 at an inner location of the disk, and the arrangement of the CSS zone 2 and the data zone 3 is opposite to that of the disk 1 of FIG. 24.

As described above, in the zone-texture magnetic disk 1, the given levitational height for the CSS zone 2 is increased, and the given levitational height for the data zone 3 is smaller than that for the CSS zone 2. When the conventional magnetic head 20 accesses the innermost area of the data zone 3 (or the boundary between the CSS zone 2 and the data zone 3), the magnetic head may be inclined or brought into contact with the disk 1 due to the interference of the conventional magnetic head 20 and the CSS zone 2. Thus, when the innermost area of the data zone 3 of the disk 1 is accessed by the conventional magnetic head 20, the contact of the magnetic head 20 with the disk 1, such as a head crash, occurs.

FIG. 27 shows a sliding condition of the conventional magnetic head 20 when the magnetic head 20 accesses the innermost area of the data zone 3 of the disk 1.

As shown in FIG. 27, in the disk 1, the given levitational height for the CSS zone 2 is increased, and the given levitational height for the data zone 3 is smaller than that for the CSS zone 2. The conventional magnetic head 20 is formed such that the height "a" of the inner rail 22 and the height "b" of the outer rail 23 are equal to each other. The inner rail 22 and the outer rail 23 of the conventional magnetic head 20 are held in a horizontal condition and in parallel to the surface of the disk 1. If the magnetic head 20 is positioned at the boundary between the data zone 3 and the CSS zone 2 of the disk 1 and further moved inward, the magnetic head 20 contacts the disk 1, and the magnetic head 20 may be damaged. In addition, the gap 24 cannot read data from or write data to the innermost area of the data zone 3 due to the interference between the magnetic head 20 and the CSS zone 2. Therefore, it is difficult that the given levitational height for the data zone 3 of the disk 1 is made sufficiently small with respect to the given levitational height for the CSS zone 2. In the case of FIG. 27, it is difficult for the conventional magnetic head 20 to perform the reading or writing of data with the disk 1 at a high output level. This makes it difficult to meet the requirement for an increased recording capacity of the magnetic disk.

SUMMARY OF THE INVENTION

An object of the present invention is to provide a levitation type head which is capable of reliably reading data from and writing data to a storage medium at a high output level even when the head accesses a peripheral area of a data zone bounded by a contact-start-stop zone in the medium.

Another object of the present invention is to provide a disk apparatus having a levitation type head which is capable of reliably reading data from and writing data to the peripheral area of the data zone bounded by the contact-start-stop zone in the medium at a high output level.

The above-mentioned objects of the present invention are achieved by a head for reading data from and writing data to a storage medium, the storage medium having a data zone and a contact-start-stop zone, wherein a given levitational height of the head for the data zone is smaller than a given levitational height of the head for the contact-start-stop zone, the head comprising: a first air bearing surface which is provided adjacent to the contact-start-stop zone of the medium and extending in a rotational direction of the medium when the head confronts the medium, the first air bearing surface being levitated at a first levitational height from the medium when the head reads data from or writes data to the medium; and a second air bearing surface which is provided adjacent to the data zone of the medium and extending in parallel to and spaced apart from the first air bearing surface when the head confronts the medium, the second air bearing surface being levitated at a second levitational height from the medium when the head reads data from or writes data to the medium, wherein a height of the first air bearing surface from a reference height surface and a height of the second air bearing surface from the reference height surface are set such that the first levitational height is larger than the given levitational height for the contact-start-stop zone of the medium by a predetermined height, and the second levitational height is larger than the given levitational height for the data zone of the medium by a predetermined height.

The above-mentioned objects of the present invention are achieved by a disk apparatus having a head for reading data from and writing data to a storage medium, the storage medium having a data zone and a contact-start-stop zone, wherein a given levitational height of the head for the data zone is smaller than a given levitational height of the head for the contact-start-stop zone, the head comprising: a first air bearing surface which is provided adjacent to the contact-start-stop zone of the medium and extending in a rotational direction of the medium when the head confronts the medium, the first air bearing surface being levitated at a first levitational height from the medium when the head reads data from or writes data to the medium; and a second air bearing surface which is provided adjacent to the data zone of the medium and extending in parallel to and spaced apart from the first air bearing surface when the head confronts the medium, the second air bearing surface being levitated at a second levitational height from the medium when the head reads data from or writes data to the medium, wherein a height of the first air bearing surface from a reference height surface and a height of the second air bearing surface from the reference height surface are set such that the first levitational height is larger than the given levitational height for the contact-start-stop zone of the medium by a predetermined height, and the second levitational height is larger than the given levitational height for the data zone of the medium by a predetermined height.

It is possible for the head of the present invention to avoid the problem of contact of the head with the contact-start-stop zone of the storage medium when the head reads data from or writes data to a peripheral area of the data zone bounded by the contact-start-stop zone in the medium. Even when the head accesses the peripheral area of the data zone in the storage medium, the head of the present invention can reliably perform the reading or writing of data with the medium at a high output level. Further, the disk apparatus having the head of the present invention is effective in providing an increased recording capacity of the storage medium.

BRIEF DESCRIPTION OF THE DRAWINGS

The above and other objects, features and advantages of the present invention will become more apparent from the following detailed description when read in conjunction with the accompanying drawings in which:

FIG. 1 is a view of a first embodiment of a levitation type head of the present invention;
FIG. 2A and FIG. 2B are diagrams showing overall dimensions of each of two models of the head of FIG. 1;
FIG. 3A and FIG. 3B are a front view and a top view of the head of FIG. 1;
FIG. 4A and FIG. 4B are diagrams showing a sliding condition of the head of FIG. 1 over a zone-texture storage medium;
FIG. 5 is a diagram for explaining a sliding condition of the head of FIG. 1 when accessing an innermost area of a data zone of the medium;
FIG. 6 is a view of a second embodiment of the levitation type head of the present invention;
FIG. 7 is a view of a third embodiment of the levitation type head of the present invention;
FIG. 8 is a view of a fourth embodiment of the levitation type head of the present invention;
FIG. 9 is a cross-sectional view of a cut-out portion of the head of FIG. 8;
FIG. 10A and FIG. 10B are diagrams showing a sliding condition of the head of FIG. 8 over the medium;
FIG. 11 is a diagram for explaining a sliding condition of the head of FIG. 8 when accessing the innermost area of the data zone of the medium;
FIG. 12 is a diagram showing a disk apparatus including another embodiment of the levitation type head shown in FIG. 1;
FIG. 13 is a view of a zone-texture storage medium contained in the disk apparatus of FIG. 12;
FIG. 14 is a view of the embodiment of the head shown in FIG. 12;
FIG. 15A and FIG. 15B are a front view and a top view of the head of FIG. 14;
FIG. 16A and FIG. 16B are diagrams showing a sliding condition of the head of FIG. 14 over the medium;
FIG. 17 is a diagram for explaining a sliding condition of the head of FIG. 14 when accessing the innermost area of the data zone of the medium;
FIG. 18 is a view of another embodiment of the levitation type head shown in FIG. 6;
FIG. 19 is a view of another embodiment of the levitation type head shown in FIG. 7;
FIG. 20 is a view of another embodiment of the levitation type head shown in FIG. 8;
FIG. 21 is a cross-sectional view of a cut-out portion of the head of FIG. 20;
FIG. 22A and FIG. 22B are diagrams showing a sliding condition of the head of FIG. 20 over the medium;
FIG. 23 is a diagram for explaining a sliding condition of the head of FIG. 20 when accessing the innermost area of the data zone of the medium;

FIG. 24 is a view of a zone-texture magnetic disk;

FIG. 25 is a view of a conventional disk apparatus having a magnetic head which accesses the magnetic disk of FIG. 24;

FIG. 26 is a perspective view of a conventional magnetic head; and

FIG. 27 is a diagram for explaining a sliding condition of the conventional magnetic head of FIG. 26.

DESCRIPTION OF THE PREFERRED EMBODIMENTS

A description will now be given of the preferred embodiments of the present invention with reference to the accompanying drawings.

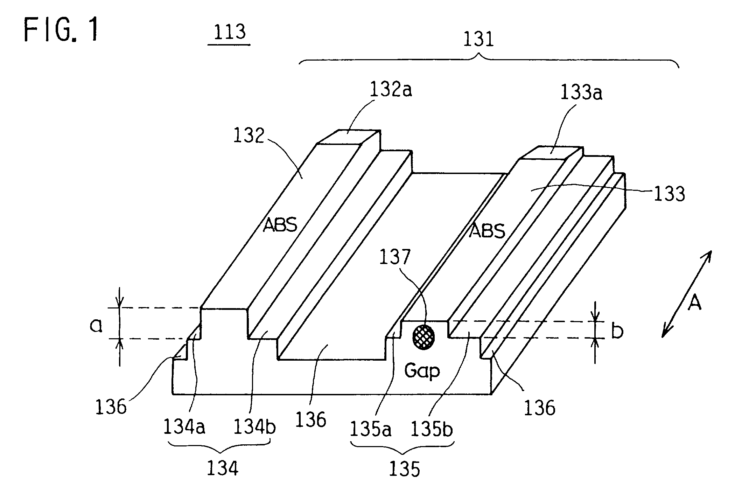

FIG. 1 shows a first embodiment of a levitation type head of the present invention.

Similar to the head 13 of FIG. 25, the head 113 of the present embodiment is provided in a disk apparatus 100 to access the zone-texture storage medium 1. In the disk apparatus 100, the storage medium 1 is rotatably held by a spindle motor 112 which is fixed to a base 111. When the spindle motor 112 is operated, the medium 1 is rotated in the rotational direction "A" (which is the same as the direction "A" shown in FIG. 24) by the spindle motor 112. The head 113 is fixed to a leading edge of an arm 114. The arm 114 is rotatably held on the base 111 at a supporting portion. A voice coil motor 115 is fixed to the base 111 and arranged at the other end of the arm 114. When the voice coil motor 115 is operated, the head 113 at the leading edge of the arm 114 is rotated around the supporting portion in the radial direction "B" (which is the same as the direction "B" shown in FIG. 25) of the medium 1 by the voice coil motor 115.

The head 113 is levitated from the surface of the medium 1 by a flow of air produced on the surface of the medium 1 by the rotation of the spindle motor 112. The data zone 3 of the medium 1 is accessed by the head 113 so that data is read from or written to the medium 1 by the head 113.

The levitation type head 113 of this embodiment is used as a magneto-resistive (MR) head or a giant-magneto-resistive (GMR) head. The head 113 is made from a wafer of $Al_2O_3TiC$. By using a thin-film fabrication technology, a magneto-resistive (MR) layer (or a giant-magneto-resistive (GMR) layer) is deposited on the wafer of $Al_2O_3TiC$, and pads and so on are formed on the wafer of $Al_2O_3TiC$. The wafer with the MR or GMR layer and the pads formed thereon is subjected to cutting and grinding so that the head 113 with air bearing surfaces (ABS) 131 formed therein is produced.

As shown in FIG. 1, in the head 113, the ABS 131 are provided on both an inner rail 132 and an outer rail 133. When the head 113 confronts the medium 1, the inner rail 132 is located near the CSS zone 2 and extends in the rotational direction "A" of the medium 1 while the outer rail 133 is located near the data zone 3 and extends in the rotational direction "A" of the medium 1.

The head 113 includes a gap 137 which serves to perform the reading or writing of data with respect to the medium 1. The gap 137 is provided on an end surface of the outer rail 133, and the end surface of the outer rail 133 extends in the radial direction "B" of the medium 1.

It should be noted that, in the head 113 of the present embodiment, the ABS 131 of the inner rail 132 and the ABS 131 of the outer rail 133 are provided in an asymmetric configuration such that the head 113 is held in an inclined condition about a horizontal axis parallel to the rotational direction "A" of the medium 1 to avoid contact with the medium 1 when the head 113 accesses a nearest area of the data zone 3 to the CSS zone 2. That is, a height "a" of the inner rail 132 and a height "b" of the outer rail 133 are different from each other. More specifically, in the present embodiment, the height "a" of the inner rail 132 is larger than the height "b" of the outer rail 133 (a > b).

On both sides of the inner rail 132, reference-height surfaces 134 extending in the rotational direction "A" are provided. The reference-height surfaces 134 include an inside reference-height surface 134a and an outside reference-height surface 134b. On both sides of the outer rail 133, reference-height surfaces 135 extending in the rotational direction "A" are provided. The reference-height surfaces 135 includes an inside reference-height surface 135a and an outside reference-height surface 135b. The reference-height surfaces 134 and the reference-height surfaces 135 are leveled with each other. The flow of air produced on the surface of the medium 1 by the rotation of the spindle motor 112 is controlled with the inner rail 132, the outer rail 133 and the reference-height surfaces 134 and 135, and the head 113 is levitated from the medium 1.

On both sides of the reference-height surfaces 134 and on both sides of the reference-height surfaces 135, recessed portions 136 are provided. The recessed portions 136 include a recessed portion inside the inside reference-height surface 134a, a recessed portion between the outside reference-height surface 134b and the inside reference-height surface 135a, and a recessed portion outside the outside reference-height surface 135b. When the head 113 slides over the medium 1, the recessed portions 136 also serve to control the flow of air produced on the surface of the medium 1 by the rotation of the spindle motor 112.

In the head 113 of FIG. 1, the end surface of the outer rail 133 on which the gap 137 is provided is located on an air-outlet side of the head 113, and the opposite end surface of the outer rail 133 is located on an air-inlet side of the head 113. Hereinafter, the former is called the outlet end surface and the latter is called the inlet end surface.

The inner rail 132 includes a slanted surface 132a on the side of the inlet end surface of the head 113. The outer rail 133 includes a slanted surface 133a on the side of the inlet end surface of the head 113. As shown in FIG.1, the slanted surface 132a and the slanted surface 133a come closer to the reference-height surfaces 134 and the reference-height surfaces 135, respectively, as they approach the inlet end surface of the head 113. The slanted surfaces 132a and 133a serve to supply the flow of air produced on the surface of the medium 1 to the inner and outer rails 132 and 133.

An actual levitational height of the head 113 from the medium 1 depends on the height "a" of the inner rail 132 from the reference-height surfaces 134 and the height "b" of the outer rail 133 from the reference-height surfaces 135.

In the present embodiment, the height "a" of the inner rail 132 is larger than the height "b" of the outer rail 133 (a > b). Because of this asymmetric configuration, an actual levitational height of the inner rail 132 from the medium 1 is larger than an actual levitational height of the outer rail 133. Therefore, when the head 113 accesses the nearest area of the data zone 3 to the CSS zone 2, the head 113 is held in an inclined condition about the horizontal axis parallel to the rotational direction "A" of the medium 1 to avoid contact with the medium 1. In the head 113 of this embodiment, the inner rail 132 is levitated at a higher position from the medium 1 than the outer rail 133.

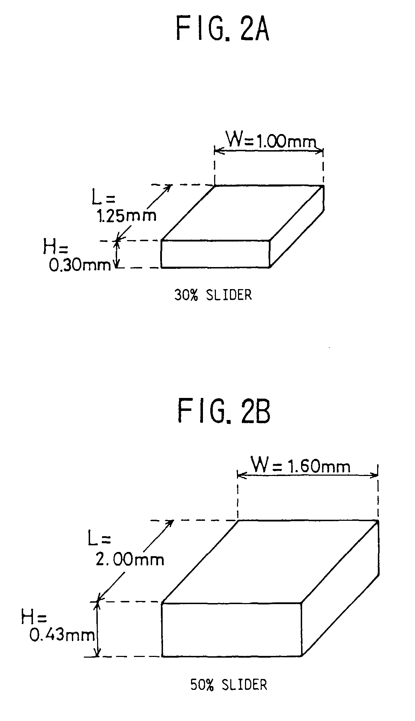

FIG. 2A and FIG. 2B show overall dimensions of each of two models of the head 113 of the present embodiment. A model of the head 113, shown in FIG. 2A, is called a 30% slider. A model of the head 113, shown in FIG. 2B, is called a 50% slider.

The 30% slider has, as shown in FIG. 2A, an overall length "L" of 1.25 mm, an overall width "W" of 1.00 mm, and an overall height "H" of 0.30 mm. The 50% slider has, as shown in FIG. 2B, an overall length "L" of 2.00 mm, an overall width "W" of 1.60 mm, and an overall height "H" of 0.43 mm.

The head 113 of the present embodiment is applicable to either the 30% slider of FIG. 2A or the 50% slider of FIG. 2B. When the head 113 of the present embodiment is applied to either one of these models, the height "a" of the inner rail 132 from the reference-height surfaces 134 and the height "b" of the outer rail 133 from the reference-height surfaces 135 are determined such that a difference in the actual levitational height between the inner rail 132 and the outer rail 133 is larger than the difference between a given levitational height for the CSS zone 2 of the medium 1 and a given levitational height for the data zone 3 thereof.

The difference in the actual levitational height between the inner rail 132 and the outer rail 133 of the head 113 is called a glide height unbalance or a roll.

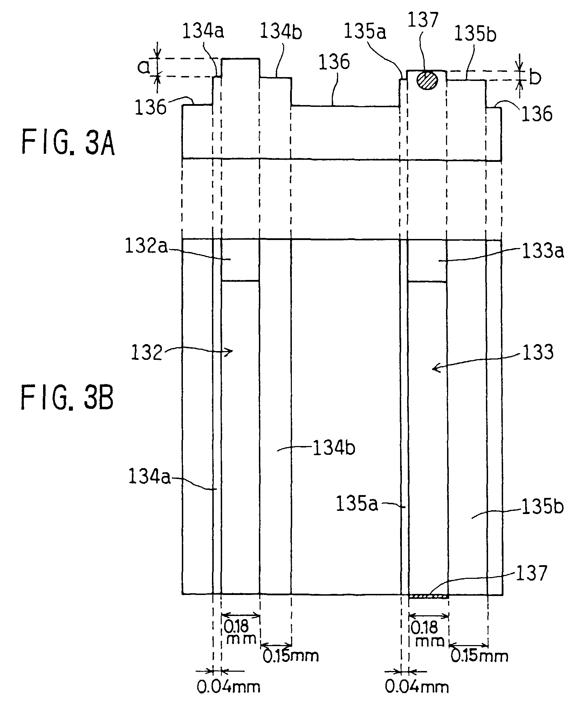

FIG. 3A and FIG. 3B are a front view and a top view of the head of the present embodiment.

As shown in FIG. 3B, in the head 113 of the present embodiment, a width of each of the inner rail 132 and the outer rail 133 is set to be 0.18 mm. A width of each of the inside reference-height surface 134a and the inside reference-height surface 135a is set to be 0.04 mm. A width of each of the outside reference-height surface 134b and the outside reference-height surface 135b is set to be 0.15 mm.

Further, in the head 113 of the present embodiment, the height "a" of the inner rail 132 from the reference-height surfaces 134 and the height "b" of the outer rail 133 from the reference-height surfaces 135 are set such that the actual levitational height of the inner rail 132 is slightly larger than the given levitational height for the CSS zone 2 of the medium 1, and the actual levitational height of the outer rail 133 is slightly larger than the given levitational height for the data zone 3 of the medium 1. For example, the height "a" and the height "b" mentioned above are set such that the actual levitational height of the inner rail 132 is larger than the given levitational height for the CSS zone 2 by 5 nm (nanometers), and the actual levitational height of the outer rail 133 is larger than the given levitational height for the data zone 3 by 5 nm.

Accordingly, when the head 113 of the present embodiment slides over the medium 1, the head 113 is held in an inclined condition and not in parallel to the surface of the medium 1. The inner rail 132 is levitated at a higher position from the medium 1 and the outer rail 133 is levitated at a lower position from the medium 1. That is, the head 113 rolls with respect to the axial direction of the arm 114 when reading data from or writing data to the medium 1.

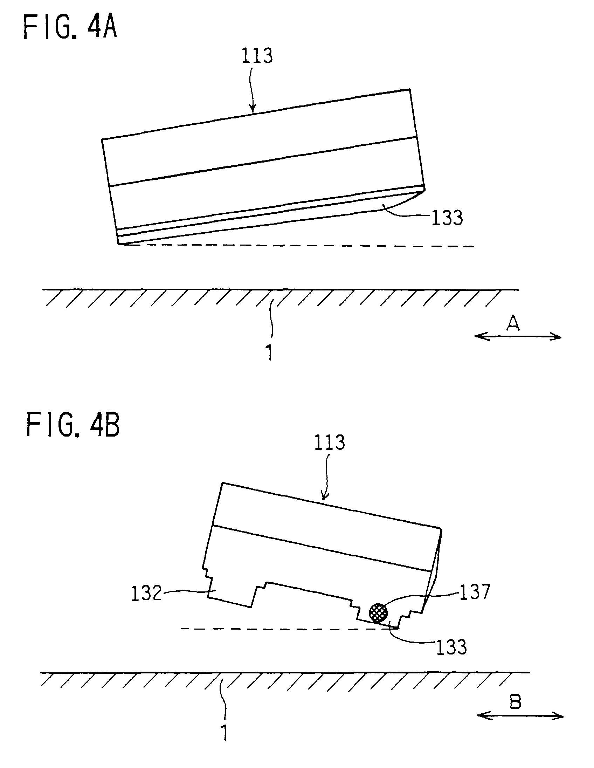

FIG. 4A and FIG. 4B show a sliding condition of the head of the present embodiment over the medium 1. FIG. 4A is a view of the head 113 sliding over the medium 1, when viewed in the radial direction "B" of the medium 1 from the outer side of the medium 1 to the inner side of the medium 1. FIG. 4B is a view of the head 113 sliding over the medium 1, when viewed in the rotational direction of the medium 1 from the outlet end surface of the head 113 to the inlet end surface of the head 113.

As described above, in the head 113 of the present embodiment, the height "a" of the inner rail 132 from the reference-height surfaces 134 is set to be larger than the height "b" of the outer rail 133 from the reference-height surfaces 135. As shown in FIG. 4B, when the head 113 slides over the medium 1, the head 113 is held in an inclined condition, the inner rail 132 is levitated at a higher position from the medium 1 and the outer rail 133 is levitated at a lower position from the medium 1. In other words, the head 113 rolls with respect to the axial direction of the arm 114 when the head 113 slides over the medium 1. Therefore, when the gap 137 of the head 113 accesses the innermost area of the data zone 3 of the medium 1, the inner rail 132 is levitated at a position higher than the given levitational height for the CSS zone 2 of the medium 1. It is possible for the head 113 of the present embodiment to avoid the problem of contact of the head 113 with the CSS zone 2 of the medium 1 when the head 113 accesses the innermost area of the data zone 3 of the medium 1.

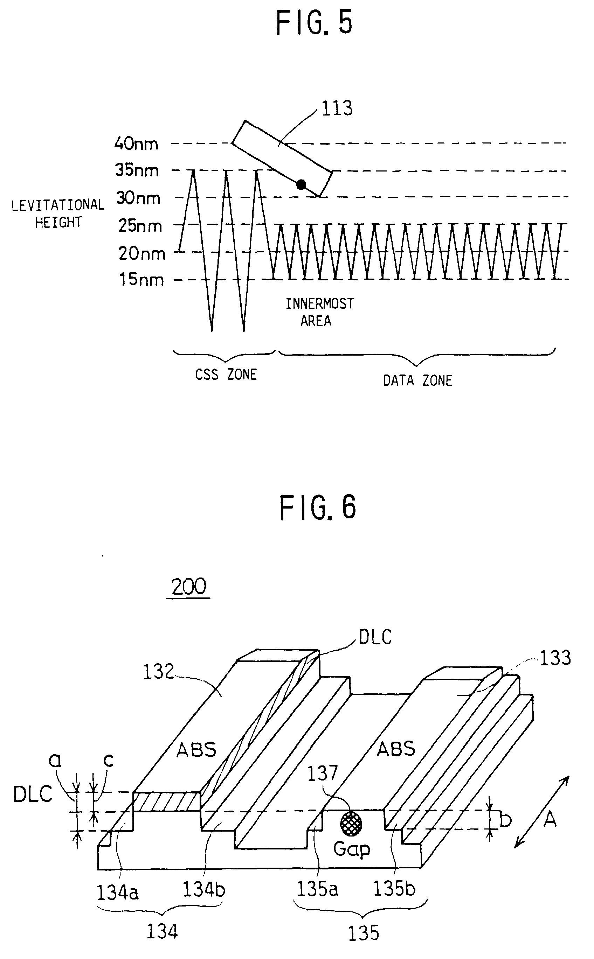

FIG. 5 shows a sliding condition of the head of the present embodiment when accessing the innermost area of the data zone 3 in the medium 1.

As shown in FIG. 5, when the head 113 slides over the boundary between the data zone 3 and the CSS zone 2 in the medium 1, the inner rail 132 is levitated at a higher position from the CSS zone 2 of the medium 1, and the problem of contact of the head 113 with the CSS zone 2 of the medium 1 is avoided. In the present embodiment, the given levitational height for the CSS zone 2 of the medium 1 is about 35 nm, and the actual levitational height of the inner rail 132 of the head 113 is about 40 nm, which is larger than the given levitational height for the CSS zone 2 by 5 nm. It is possible for the head of the present embodiment to avoid the problem of head crash.

Further, in the present embodiment, when the head 113 slides over the boundary between the data zone 3 and the CSS zone 2 in the medium 1, the given levitational height for the data zone 3 of the medium 1 is about 25 nm, and the actual levitational height of the outer rail 133 of the head 113 is about 30 nm, which is larger than the given levitational height for the data zone 3 by 5 nm. The difference between the actual levitational height of the outer rail 133 and the given levitational height for the data zone 3 is appropriate for the gap 137 of the head 113 to read data from or write data to the medium 1. It is possible for the head of the present embodiment to reliably perform the reading or writing of data with the medium 1 at a high output level.

Accordingly, in the head of the present embodiment, even when the head accesses the innermost area of the data zone bounded by the CSS zone in the medium, it is possible to reliably perform the reading or writing of data with the medium at a high output level.

In the disk apparatus wherein the medium 1 is accessed by the head 113 of the present embodiment, it is possible to provide an increased recording capacity of the storage medium.

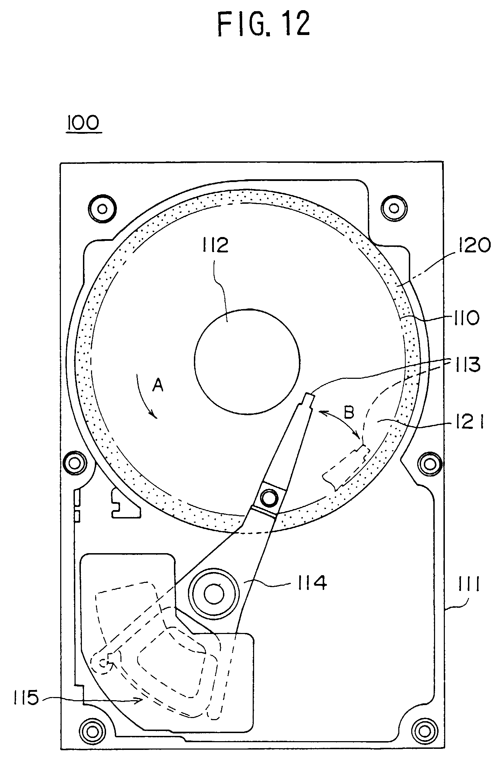

FIG. 12 shows a disk apparatus which includes another embodiment of the levitation type head of FIG. 1.

As shown in FIG. 12, in the disk apparatus 100 of the present embodiment, a zone-texture storage medium 110 is rotatably held by the spindle motor 112 which is fixed to the base 111. When the spindle motor 112 is operated, the medium 110 is rotated in the rotational direction "A" by the spindle motor 112. The head 113 is fixed to the leading edge of the arm 114. The arm 114 is rotatably held on the base 111 at the supporting portion. The voice coil motor 115 is fixed to the base 111 and arranged at the other end of the arm 114. When the voice coil motor 115 is operated, the head 113 at the leading edge of the arm 114 is rotated around the supporting portion in the radial direction "B" of the medium 110 by the voice coil motor 115.

The head 113 is levitated from the surface of the medium 110 with the flow of air produced on the surface of the medium 110 by the rotation of the spindle motor 112. The data zone 3 of the medium 110 is accessed by the head 113 being levitated so that data is read from or written to the medium 110 by the head 113.

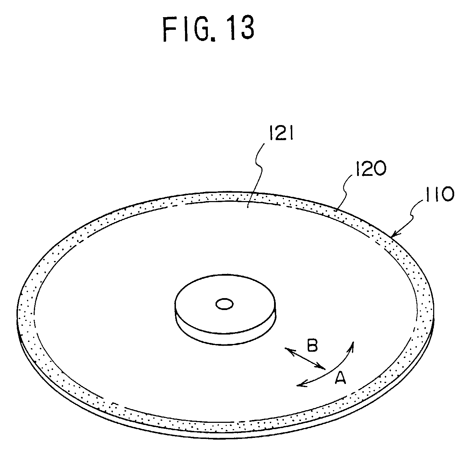

FIG. 13 shows the zone-texture storage medium 110 which is accessed by the head 113 contained in the disk apparatus 100 of the present embodiment.

The storage medium 110 of FIG. 13 is different from the medium 1 of FIG. 24. The storage medium 110 has a CSS zone 120 at an outer location of the medium 110 and a data zone 121 at an inner location of the medium 110. The arrangement of the CSS zone 120 and the data zone 121 in the medium 110 is opposite to that of the medium 1 of FIG. 24. Except the data zone 121 is surrounded by the CSS zone 120 in the medium 110, all the features of the medium 110 of FIG. 13 are the same as those of the medium 1 of FIG. 24.

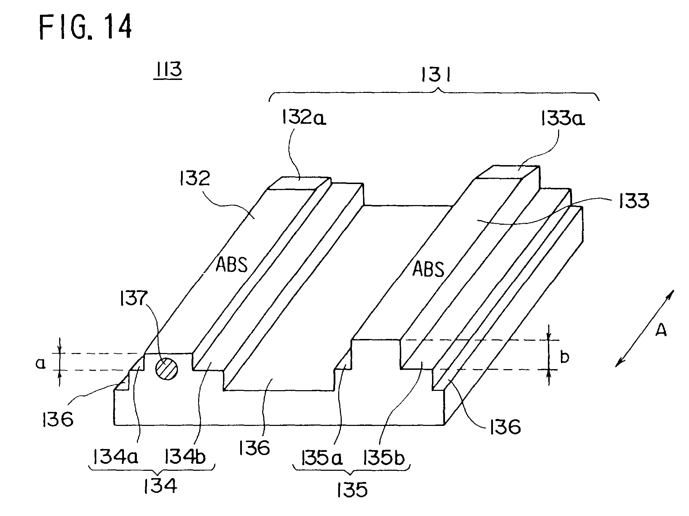

FIG. 14 shows the present embodiment of the levitation type head in FIG. 12. In FIG. 14, the elements which are the same as corresponding elements in FIG. 1 are designated by the same reference numerals, and a description thereof will be omitted.

The head 113 of the present embodiment functions to read data from or write data to the storage medium 110 of FIG. 13 in which the CSS zone 120 is located at the outer periphery and the data zone 121 is located inside the CSS zone 120.

As shown in FIG. 14, in the head 113 of the present embodiment, the air bearing surfaces (ABS) 131 are provided on the inner rail 132 and the outer rail 133. When the head 113 confronts the zone-texture storage medium 110, the inner rail 132 is located near the data zone 121 and extends in the rotational direction "A" of the medium 110 while the outer rail 133 is located near the CSS zone 120 and extends in the rotational direction "A" of the medium 110.

The head 113 of FIG. 14 includes the gap 137 which serves to perform the reading or writing of data with respect to the medium 110. The gap 137 is provided on the end surface of the inner rail 132, and the end surface of the inner rail 132 extends in the radial direction "B" of the medium 110. The end surface on which the gap 137 is provided is located on the air-outlet side of the head 113.

It should be noted that, in the head 113 of the present embodiment, the ABS 131 of the inner rail 132 and the ABS 131 of the outer rail 133 are provided in an asymmetric configuration such that the head 113 is held in an inclined condition about a horizontal axis parallel to the rotational direction "A" of the medium 110 to avoid contact with the medium 110 when the head 113 accesses a nearest area of the data zone 121 to the CSS zone 120. That is, the height "a" of the inner rail 132 from the reference-height surfaces 134 is smaller than the height "b" of the outer rail 133 from the reference-height surfaces 135 (a < b).

As described above, the actual levitational height of the head 113 from the medium 110 depends on the height "a" of the inner rail 132 from the reference-height surfaces 134 and the height "b" of the outer rail 133 from the reference-height surfaces 135.

In the present embodiment, the height "a" of the inner rail 132 is smaller than the height "b" of the outer rail 133 (a < b). Because of this asymmetric configuration, the actual levitational height of the inner rail 132 from the medium 110 is smaller than the actual levitational height of the outer rail 133. Therefore, when the head 113 accesses the nearest area of the data zone 121 to the CSS zone 120, the head 113 is held in an inclined condition about the horizontal axis parallel to the rotational direction "A" of the medium 110 to avoid contact with the medium 110. In the head 113 of this embodiment, the inner rail 132 is levitated at a lower position from the medium 110 than the outer rail 133.

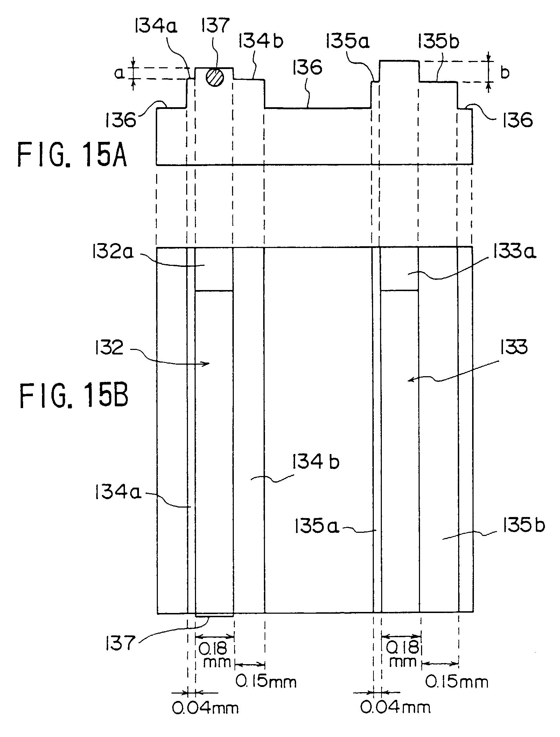

FIG. 15A and FIG. 15B are a front view and a top view of the head of the present embodiment. Except for the height "a" of the inner rail 132 which is smaller than the height "b" of the outer rail 133 and the gap 137 which is formed on the end surface of the inner rail 132, all the features of the head 113 of FIG. 15A and FIG. 15B are the same as those of the head 113 of FIG. 3A and FIG. 3B.

It should be noted that, in the head of the present embodiment, the height "a" and the height "b" mentioned above are set such that the difference between the actual levitational height of the outer rail 133 and the given levitational height for the CSS zone 120 is larger than 5 nm, and the difference between the actual levitational height of the inner rail 132 and the given levitational height for the data zone 121 is larger than 5 nm.

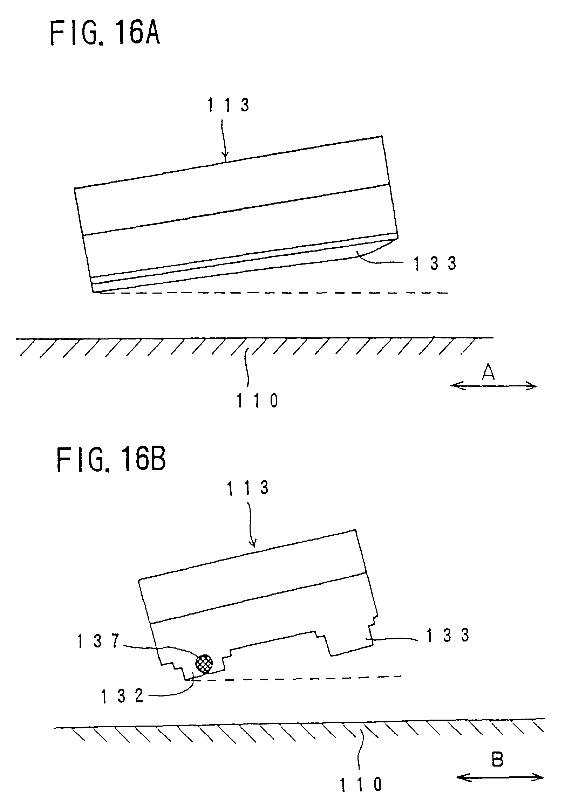

FIG. 16A and FIG. 16B show a sliding condition of the head of the present embodiment over the storage medium. FIG. 16A is a view of the head 113 sliding over the medium 110, when viewed in the radial direction "B" of the medium 110 from the outer side of the medium 110 to the inner side of the medium 110. FIG. 16B is a view of the head 113 sliding over the medium 110, when viewed in the rotational direction "A" of the medium 110 from the outlet end surface of the head 113 to the inlet end surface of the head 113.

As described above, in the head 113 of the present embodiment, the height "a" of the inner rail 132 from the reference-height surfaces 134 is set to be smaller than the height "b" of the outer rail 133 from the reference-height surfaces 135. As shown in FIG. 16B, when the head 113 slides over the medium 110, the head 113 is held in an inclined condition, the inner rail 132 is levitated at a lower position from the medium 110 and the outer rail 133 is levitated at a higher position from the medium 110. In other words, the head 113 rolls with respect to the axial direction of the arm 114 when the head 113 slides over the medium 110.

Therefore, when the gap 137 of the head 113 accesses the outermost area of the data zone 121 bounded by the CSS zone 120 in the medium 110, the outer rail 133 is levitated at a position higher than the given levitational height for the CSS zone 120 of the medium 110. It is possible for the head 113 of the present embodiment to avoid the problem of contact of the head 113 with the CSS zone 120 of the medium 110 when the head 113 accesses the outermost area of the data zone 121 bounded by the CSS zone 120 in the medium 110.

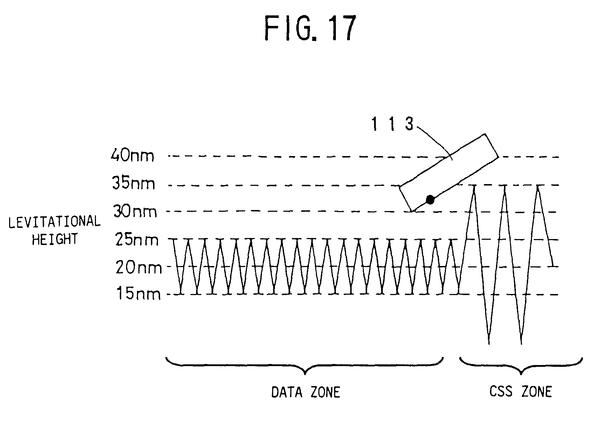

FIG. 17 shows a sliding condition of the head of present embodiment when accessing the peripheral area of the data zone bounded by the CSS zone in the storage medium.

As shown in FIG. 17, when the head 113 slides over the boundary between the data zone 121 and the CSS zone 120 in the medium 110, the outer rail 133 is levitated at a position higher than the CSS zone 120 of the medium 110, and the problem of contact of the head 113 with the CSS zone 120 of the medium 110 is avoided. In the present embodiment, the given levitational height for the CSS zone 120 of the medium 110 is about 35 nm, and the actual levitational height of the outer rail 132 of the head 113 is about 40 nm, which is larger than the given levitational height for the CSS zone 120 by about 5 nm. It is possible for the head of the present embodiment to avoid the problem of head crash.

Further, in the present embodiment, when the head 113 slides over the boundary between the data zone 121 and the CSS zone 120 in the medium 110, the given levitational height for the data zone 121 of the medium 110 is about 25 nm, and the actual levitational height of the inner rail 132 of the head 113 is about 30 nm, which is larger than the given levitational height for the data zone 121 by about 5 nm. The difference between the actual levitational height of the inner rail 132 and the given levitational height for the data zone 121 is appropriate for the gap 137 of the head 113 to read data from or write data to the medium 110. It is possible for the head of the present embodiment to reliably perform the reading or writing of data with the medium 110 at a high output level.

Accordingly, in the head of the present embodiment, even when the head accesses the outermost area of the data zone bounded by the CSS zone in the storage medium, it is possible to reliably perform the reading or writing of data with the medium at a high output level.

In the disk apparatus 100 wherein the storage medium 110 is accessed by the head 113 of the present embodiment, it is possible to provide an increased recording capacity of the storage medium.

Next, FIG. 6 shows a second embodiment of the levitation type head of the present invention. In FIG. 6, the elements which are the same as corresponding elements in FIG. 1 are designated by the same reference numerals, and a description thereof will be omitted.

The head 200 of the present embodiment functions to read data from or write data to the storage medium 1 of FIG. 24. The gap 137 is provided on the end surface of the outer rail 133 similar to that of the head 113 of FIG. 1.

Similar to the head 113 of FIG. 1, the head 200 of this embodiment is made from a wafer of $Al_2O_3TiC$. By using a thin-film fabrication technology, the MR layer (or the GMR layer), the pads and so on are formed on the wafer of $Al_2O_3TiC$. The wafer with the MR or GMR layer and the pads formed thereon is subjected to cutting and grinding so that the head with the air bearing surfaces (ABS) 131 formed therein is produced. During the cutting process, a height of the inner rail 132 from the reference-height surfaces 134 and a height of the outer rail 133 from the reference-height surfaces 135 are leveled with each other. That is, both the heights of the inner rail 132 and the outer rail 133 at this time are set to be equal to the height "b".

After the above cutting process, a diamond-like-carbon (DLC) layer is deposited on the inner rail 132 of the head by using a thin-film fabrication technology. A total height of the resulting inner rail 132 from the reference-height surfaces 134 is set to be equal to the height "a" of the inner rail 132 mentioned above. That is, when a height of the DLC layer in the inner rail 132 is set to be equal to "c", the total height of the resulting inner rail 132 from the reference-height surfaces 134 is equal to a sum of the height "b" and the height "c" ( a = b + c ).

In the above-described embodiment, the DLC layer is deposited only on the inner rail 132. However, in order to provide a higher strength for the air bearing surfaces of the head, the DLC layer may be deposited on both the inner rail 132 and the outer rail 133 with the heights of the inner rail 132 and the outer rail 133.

According to the present embodiment of the head, the cutting process in which the inner rail 132 and the outer rail 133 are leveled with each other, can be performed in the same manner as a cutting process for the conventional head of FIG. 26. Only when the head of the present embodiment for accessing the storage medium 1 is produced, the deposition of the DLC layer on the head in which the total height of the inner rail 132 is set to be equal to the height "a" mentioned above is required. Therefore, only the adjustment of the amount of the DLC layer deposited on the head is required for the production of the present embodiment of the head, and the general versatility of the production of the head can be improved.

Further, in the present embodiment of the head, the strength of the inner rail 132 can be increased by the deposition of the DLC layer thereon, and the present embodiment is effective in highly increasing the durability of the head.

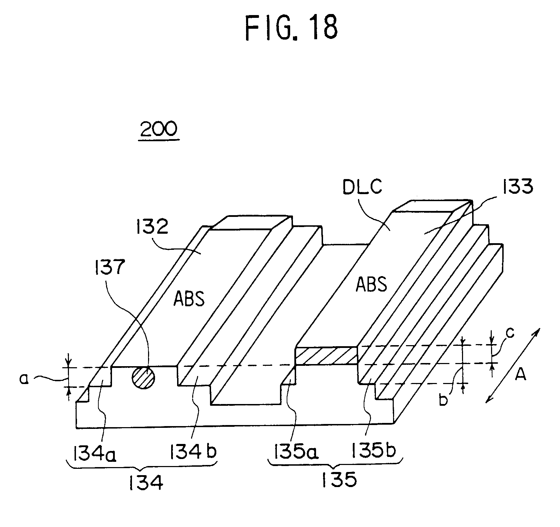

FIG. 18 shows another embodiment of the levitation type head shown in FIG. 6. In FIG. 18, the elements which are the same as corresponding elements in FIG.

14 are designated by the same reference numerals, and a description thereof will be omitted.

The head 200 of the present embodiment functions to read data from or write data to the storage medium 110 of FIG. 13 in which the CSS zone 120 is located at the outer periphery and the data zone 121 is located inside the CSS zone 120. The gap 137 is provided on the end surface of the inner rail 132 similar to that of the head 113 of FIG. 14.

Similar to the head 113 of FIG. 14, the head 200 of this embodiment is made from a wafer of $Al_2O_3TiC$. By using a thin-film fabrication technology, the MR layer (or the GMR layer), the pads and so on are formed on the wafer of $Al_2O_3TiC$. The wafer with the MR or GMR layer and the pads formed thereon is subjected to cutting and grinding so that the head with the air bearing surfaces (ABS) 131 formed therein is produced. During the cutting process, a height of the inner rail 132 from the reference-height surfaces 134 and a height of the outer rail 133 from the reference-height surfaces 135 are leveled with each other. That is, both the heights of the inner rail 132 and the outer rail 133 at this time are set to be equal to the height "a".

After the above cutting process, the diamond-like-carbon (DLC) layer is deposited on the outer rail 133 of the head by using a thin-film fabrication technology. A total height of the resulting outer rail 133 from the reference-height surfaces 135 is set to be equal to the height "b" of the outer rail 133 mentioned above. That is, when a height of the DLC layer in the outer rail 133 is set to be equal to "c", the total height of the resulting outer rail 133 from the reference-height surfaces 135 is equal to a sum of the height "a" and the height "c" ( b = a + c ).

According to the present embodiment of the head, the cutting process in which the inner rail 132 and the outer rail 133 are leveled with each other, can be performed in the same manner as the cutting process for the conventional head of FIG. 26. Only when the head of the present embodiment for accessing the storage medium 110 is produced, the deposition of the DLC layer on the head in which the total height of the outer rail 133 is set to be equal to the height "b" mentioned above is required. Since only the adjustment of the amount of the DLC layer deposited on the head is required for the production of the present embodiment of the head, the general versatility of the production of the head can be improved by the present embodiment.

Further, in the present embodiment of the head, the strength of the head 113 can be increased by the deposition of the DLC layer thereon, and the present embodiment is effective in increasing the durability of the head.

In the above-described embodiments of FIG. 1 and FIG. 6, the actual levitational height of the inner rail 132 of the head is made larger than the given levitational height for the CSS zone of the medium by setting the height of the inner rail 132 to be larger than the height of the outer rail 133. Alternatively, by setting a width of the inner rail 132 to be larger than a width of the outer rail 133, the actual levitational height of the inner rail 132 head may be larger than the given levitational height for the CSS zone of the medium.

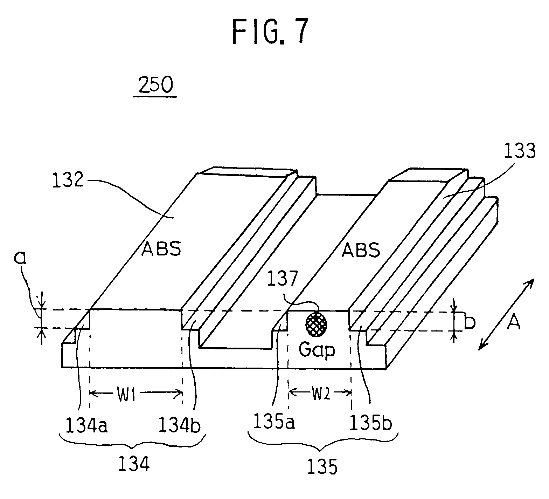

Next, FIG. 7 shows a third embodiment of the levitation type head of the present invention. In FIG. 7, the elements which are the same as corresponding elements in FIG. 1 are designated by the same reference numerals, and a description thereof will be omitted.

The head 250 of the present embodiment functions to read data from or write data to the storage medium 1 of FIG. 24. The gap 137 is provided on the end surface of the outer rail 133 similar to that of the head 113 of FIG. 1.

As shown in FIG. 7, in the head 250 of the present embodiment, a width "W1" of the inner rail 132 (or the ABS) in the radial direction of the medium is enlarged and a width "W2" of the outer rail 133 (or the ABS) in the radial direction of the storage medium is set to be smaller than the width "W1" of the inner rail 132.

In the present embodiment, the height "a" of the inner rail 132 from the reference-height surfaces 134 is set to be equal to the height "b" of the outer rail 133 from the reference-height surfaces 135 (a = b). The actual levitational height of the head 113 from the storage medium depends on the width "W1" of the inner rail 132 in the radial direction of the medium and the width "W2" of the outer rail 133 in the radial direction of the medium. The width "W1" of the inner rail 132 and the width "W2" of the outer rail 133 are set such that the actual levitational height of the inner rail 132 is slightly larger than the given levitational height for the CSS zone 2 of the medium 1, and the actual levitational height of the outer rail 133 is slightly larger than the given levitational height for the data zone 3 of the medium 1.

Specifically, in the present embodiment, the width "W1" and the width "W2" mentioned above are set such that the difference between the actual levitational height of the inner rail 132 and the given levitational height for the CSS zone 2 is larger than 5 nm, and the difference between the actual levitational height of the outer rail 133 and the given levitational height for the data zone 3 is larger than 5 nm, similarly to those in the head 113 of FIG. 1.

The difference between the actual levitational height of the outer rail 133 and the given levitational height for the data zone 3 is appropriate for the gap 137 of the head 250 to read data from or write data to the medium 1. It is possible for the head of the present embodiment to reliably perform the reading or writing of data with the medium 1 at a high output level.

Accordingly, in the head of the present embodiment, even when the head accesses the innermost area of the data zone bounded by the CSS zone in the medium, the problem of contact of the head 250 with the CSS zone 2 of the medium 1 can be avoided, and it is possible to reliably perform the reading or writing of data with the medium 1 at a high output level.

In the disk apparatus wherein the medium 1 is accessed by the head 250 of the present embodiment, it is possible to provide an increased recording capacity of the storage medium.

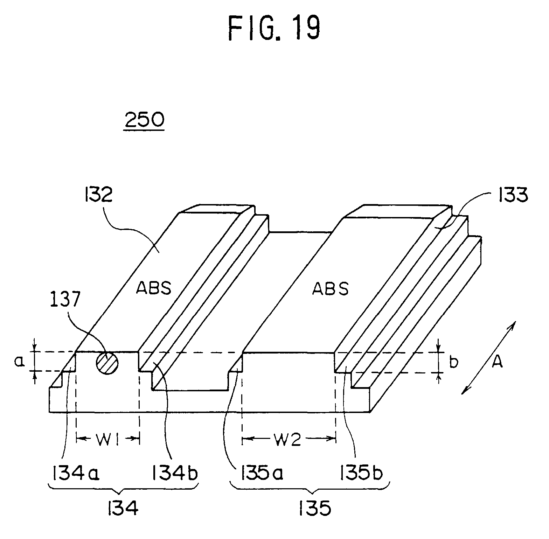

FIG. 19 shows another embodiment of the levitation type head shown in FIG. 7. In FIG. 19, the elements which are the same as corresponding elements in FIG. 7 are designated by the same reference numerals, and a description thereof will be omitted.

The head 250 of the present embodiment functions to read data from or write data to the storage medium of FIG. 13 in which the CSS zone 120 is located at the outer periphery and the data zone 121 is located inside the CSS zone 120. The gap 137 is provided on the end surface of the inner rail 132 similar to that of the head 113 of FIG. 14.

As shown in FIG. 19, the width "W1" of the inner rail 132 (or the ABS) in the radial direction of the medium is reduced and the width "W2" of the outer rail 133 (or the ABS) in the radial direction of the storage medium is enlarged so as to be larger than the width "W1" of the inner rail 132 (W1 < W2).

In the present embodiment, the height "a" of the inner rail 132 from the reference-height surfaces 134 is set to be equal to the height "b" of the outer rail 133 from the reference-height surfaces 135 (a = b). The actual levitational height of the head 250 from the storage medium depends on the width "W1" of the inner rail 132 in the radial direction of the medium and the width "W2" of the outer rail 133 in the radial direction of the medium. The width "W1" of the inner rail 132 and the width "W2" of the outer rail 133 are set such that the actual levitational height of the inner rail 132 is slightly larger than the given levitational height for the CSS zone 120 of the medium 110, and the actual levitational height of the outer rail 133 is slightly larger than the given levitational height for the data zone 121 of the medium 110.

Specifically, in the present embodiment, the width "W1" and the width "W2" mentioned above are set different such that the difference between the actual levitational height of the inner rail 132 and the given levitational height for the CSS zone 120 is larger than 5 nm, and the difference between the actual levitational height of the outer rail 133 and the given levitational height for the data zone 121 is larger than 5 nm, similar to those in the head 113 of FIG. 14.

The difference between the actual levitational height of the outer rail 133 and the given levitational height for the data zone 3 is appropriate for the gap 137 of the head 250 to read data from or write data to the medium 110. It is possible for the head of the present embodiment to reliably perform the reading or writing of data with the medium 110 at a high output level.

Accordingly, in the head 250 of the present embodiment, when the head accesses the outermost area of the data zone bounded by the CSS zone in the medium, the problem of contact of the head 250 with the CSS zone 120 of the medium 110 can be avoided, and it is possible to reliably perform the reading or writing of data with the medium 110 at a high output level.

In the disk apparatus wherein the medium 110 is accessed by the head 250 of the present embodiment, it is possible to provide an increased recording capacity of the storage medium.

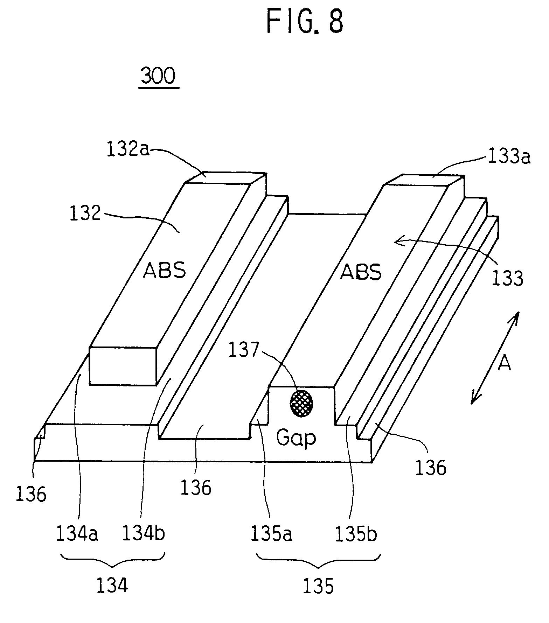

Next, FIG. 8 shows a fourth embodiment of the levitation type head of the present invention. In FIG. 8, the elements which are the same as corresponding elements in FIG. 1 are designated by the same reference numerals, and a description thereof will be omitted.

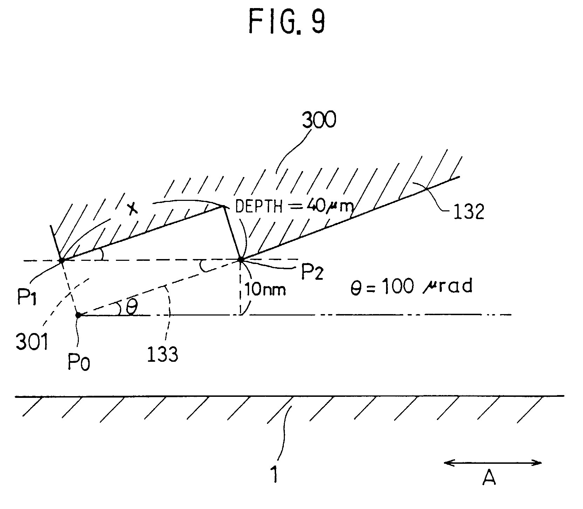

As shown in FIG. 8, in the head 300 of the present embodiment, the height "a" of the inner rail 132 from the reference-height surfaces 134 is set to be equal to the height "b" of the outer rail 133 from the reference-height surfaces 135 (a = b), and a cut-out portion (indicated by reference numeral 301 in FIG. 9) is formed at an air-outlet end portion of the inner rail 132 when the head 300 slides over the storage medium 1. The cut-out portion 301 in the inner rail 132 is located on the outlet-end side of the bottom of the head 300 when the head 300 confronts the medium 1.

In the head 300 of the present embodiment, a length of the cut-out portion 301 of the inner rail 132 in the rotational direction A of the medium 1 is set such that the lowest position of the inner rail 132 is higher than the lowest position of the outer rail 133 by a predetermined height. The predetermined height is set to be slightly larger than the difference between the given levitational height for the CSS zone 2 of the medium 1 and the given levitational height for the data zone 3 of the medium 1.

FIG. 9 is a cross-sectional view of the cut-out portion 301 of the head 300 of the present embodiment.

As shown in FIG. 9, in the head 300 of the present embodiment, the length "X" of the cut-out portion 301 in the rotational direction A of the medium 1 is set such that the lowest position "P1" or "P2" of the inner rail 132 is higher than the lowest position "P0" of the outer rail 133 by the predetermined height (which is, for example, 10 nm) when the head 300 is at an inclined angle "0" (which is, for example, 100 $\mu$ rad.) with the surface of the medium 1 and slides over the medium 1. The predetermined height is slightly larger than the difference between the given levitational height for the CSS zone 2 of the medium 1 and the given levitational height for the data zone 3 of the medium 1.

For example, supposing that the inclined angle $\theta$ is 100 $\mu$ rad., the actual levitational height of the inner rail 132 from the reference-height surfaces 134 is 40 nm and the actual levitational height of the outer rail 133 from the reference-height surfaces 135 is 40 nm, the length "X" of the cut-out portion 301 is determined by the equation $X = 10 \text{ nm}/\sin \theta$ where the difference between the lowest position "P1" or "P2" of the inner rail 132 and the lowest position "P0" of the outer rail 133 is equal to 10 nm.

In the head 300 of the present embodiment, the cut-out portion 301 of the inner rail 132 has a depth of about 40 $\mu$m as shown in FIG. 9.

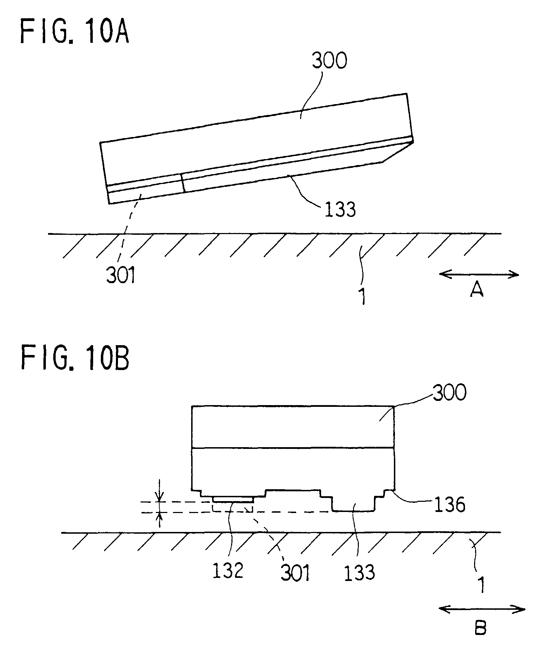

FIG. 10A and FIG. 10B show a sliding condition of the head of the present embodiment over the storage medium. FIG. 10A is a view of the head 300 sliding over the medium 1, when viewed in the radial direction "B" of the medium 1 from the outer side of the medium 1 to the inner side of the medium 1. FIG. 10B is a view of the head 300 sliding over the medium 1, when viewed in the rotational direction "A" of the medium 1 from the outlet end surface of the head 300 to the inlet end surface of the head 300.

As described above, in the head 300 of this embodiment, the height "a" of the inner rail 132 from the reference-height surfaces 134 is set to be equal to the height "b" of the outer rail 133 from the reference-height surfaces 135. The cut-out portion 301 in the inner rail 132 is formed. As shown in FIG. 10B, when the head 300 slides over the medium 1, the head 300 is held substantially in a horizontal condition.

However, in the present embodiment, the inner rail 132 is levitated at a higher position from the medium 1 and the outer rail 133 is levitated at a lower position from the medium 1. As shown in FIG. 10A and FIG. 10B, the lowest position of the inner rail 132 is always higher than the lowest position of the outer rail 133 by the predetermined height (which is, for example, about 10 nm). The length of the cutout portion 301 in the inner rail 132 is set such that the lowest position of the inner rail 132 is higher than the lowest position of the outer rail 133 by the predetermined height. The predetermined height is slightly larger than the difference between the given levitational height for the CSS zone 2 of the medium 1 and the given levitational height for the data zone 3 of the medium 1.

Accordingly, in the head 300 of this embodiment, the ABS 131 of the inner rail 132 and the ABS 131 of the outer rail 133 are provided in an asymmetric configuration and the inner rail 132 has the cut-out portion 301 at the air-outlet end portion of the inner rail 132, such that the head 300 is held in a horizontal condition parallel to the rotational direction "A" of the medium 1 to avoid contact with the medium 1 when the head 300 accesses the nearest area of the data zone 3 to the CSS zone 2.

Therefore, when the gap 137 of the head 300 accesses the innermost area of the data zone 3 of the medium 1, the lowest position of the inner rail 132 is slightly higher than the given levitational height for the CSS zone 2 of the medium 1. It is possible for the head 300 of the present embodiment to avoid the problem of contact of the head 300 with the CSS zone 2 of the medium 1 when the head 300 accesses the innermost area of the data zone 3 of the medium 1.

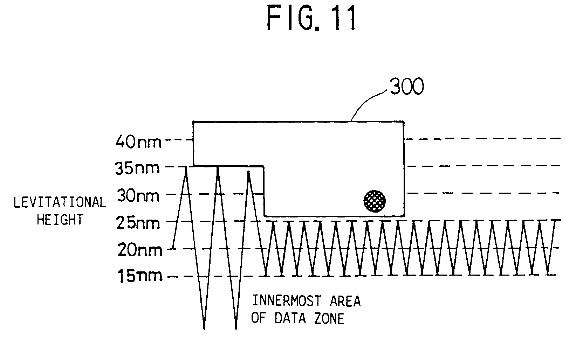

FIG. 11 shows a sliding condition of the head of the present embodiment when accessing the innermost area of the data zone in the storage medium.

As shown in FIG. 11, when the head 300 slides over the boundary between the data zone 3 and the CSS zone 2 in the medium 1, the lowest position of the inner rail 132 is set to be higher than the lowest position of the outer rail 133 on the bottom of the head 300 by about 10 nm. The difference between the lowest position of the inner rail 132 and the lowest position of the outer rail 133 is appropriately the same as the difference between the given levitational height for the CSS zone 2 of the medium 1 and the given levitational height for the data zone 3 of the medium 1. Therefore, when the head 300 slides over the innermost area of the data zone 3 bounded by the CSS zone 2 in the medium 1, the problem of contact of the head 300 with the CSS zone 2 of the medium 1 is avoided.

Specifically, in the present embodiment, the given levitational height for the CSS zone 2 of the medium 1 is about 35 nm, and the actual levitational height of the inner rail 132 of the head 300 is slightly larger than the given levitational height for the CSS zone 2. Further, in the present embodiment, the given levitational height for the data zone 3 of the medium 1 is about 25 nm, and the actual levitational height of the outer rail 133 of the head 300 is slightly larger than the given levitational height for the data zone 3. The difference between the actual levitational height of the outer rail 133 and the given levitational height for the data zone 3 is appropriate for the gap 137 of the head 300 to read data from or write data to the medium 1. It is possible for the head 300 of the present embodiment to reliably perform the reading or writing of data with the medium 1 at a high output level.

Accordingly, in the head 300 of the present embodiment, when the head accesses the innermost area of the data zone bounded by the CSS zone in the medium, it is possible to reliably perform the reading or writing of data with the medium at a high output level.

In the disk apparatus in which the storage medium 1 is accessed by the head 300 of the present embodiment, it is possible to provide an increased recording capacity of the storage medium.

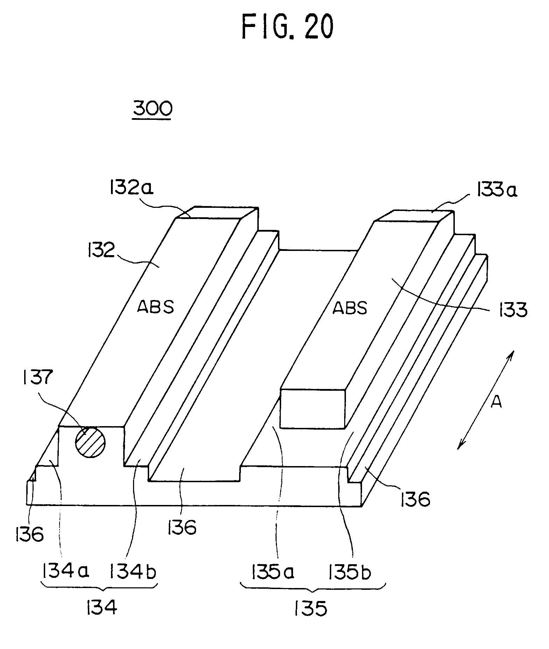

FIG. 20 shows another embodiment of the levitation type head shown in FIG. 8. In FIG. 20, the elements which are the same as corresponding elements in FIG. 8 are designated by the same reference numerals, and a description thereof will be omitted.

The head 300 of the present embodiment functions to read data from and write data to the storage medium 110 of FIG. 13 in which the CSS zone 120 is located at the outer periphery and the data zone 121 is located inside the CSS zone 120. The gap 137 is provided on the end surface of the inner rail 132 similar to that of the head 113 of FIG. 14.

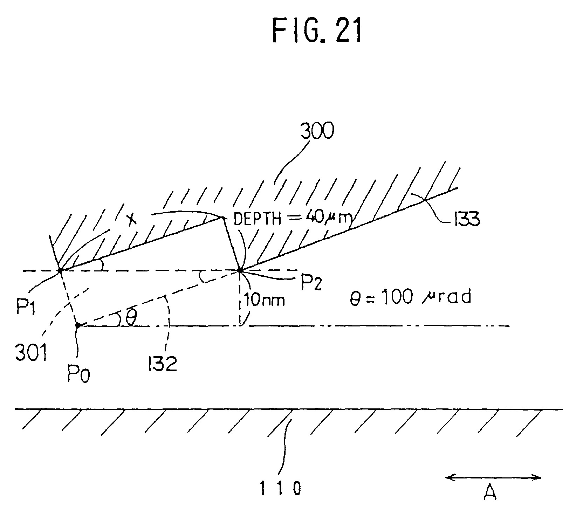

As shown in FIG. 20, in the head 300 of the present embodiment, the height "a" of the inner rail 132 from the reference-height surfaces 134 is set to be equal to the height "b" of the outer rail 133 from the reference-height surfaces 135 (a = b), and the cut-out portion (indicated by reference numeral 301 in FIG. 21) is formed at the lowest position of the outer rail 133 when the head 300 slides over the storage medium 110. The cut-out portion 301 in the outer rail 133 is located on the outlet-end side of the bottom of the head 300 when the head 300 confronts the medium 110.

In the head 300 of the present embodiment, the length of the cut-out portion 301 of the outer rail 133 in the rotational direction A of the medium 110 is set such that the lowest position of the outer rail 133 is higher than the lowest position of the inner rail 132 by the predetermined height. The predetermined height is set to be slightly larger than the difference between the given levitational height for the CSS zone 120 of the medium 110 and the given levitational height for the data zone 121 of the medium 110.

FIG. 21 is a cross-sectional view of the cut-out portion 301 of the head 300 of the present embodiment.

In FIG. 21, the elements which are the same as corresponding elements in FIG. 9 are designed by the same reference numerals, and a description thereof will be omitted.

As shown in FIG. 21, in the head 300 of the present embodiment, the outer rail 133 includes the cut-out portion 301. The length "X" of the cut-out portion 301 in the rotational direction A of the medium 110 is set such that the lowest position "P1" or "P2" of the outer rail 133 is higher than the lowest position "P0" of the inner rail 132 by the predetermined height (which is equal to, for example, 10 nm) when the head 300 is at the inclined angle "0" (for example, $\theta$ = 100 $\mu$ rad.) with the surface of the medium 110 and slides over than the medium 110. The predetermined height is slightly larger than the difference between the given levitational height for the CSS zone 120 of the medium 110 and the given levitational height for the data zone 121 of the medium 110.

For example, supposing that the inclined angle $\theta$ is 100 $\mu$ rad., the actual levitational height of the inner rail 132 from the reference-height surfaces 134 is 40 nm and the actual levitational height of the outer rail 133 from the reference-height surfaces 135 is 40 nm, the length "X" of the cut-out portion 301 is determined by the equation $X = 10 \text{ nm}/\sin \theta$ where the difference between the lowest position "P1" or "P2" of the outer rail 133 and the lowest position "P0" of the inner rail 132 is equal to 10 nm.

In the head 300 of the present embodiment, the cut-out portion 301 of the outer rail 133 has a depth of about 40 $\mu$m as shown in FIG. 21.

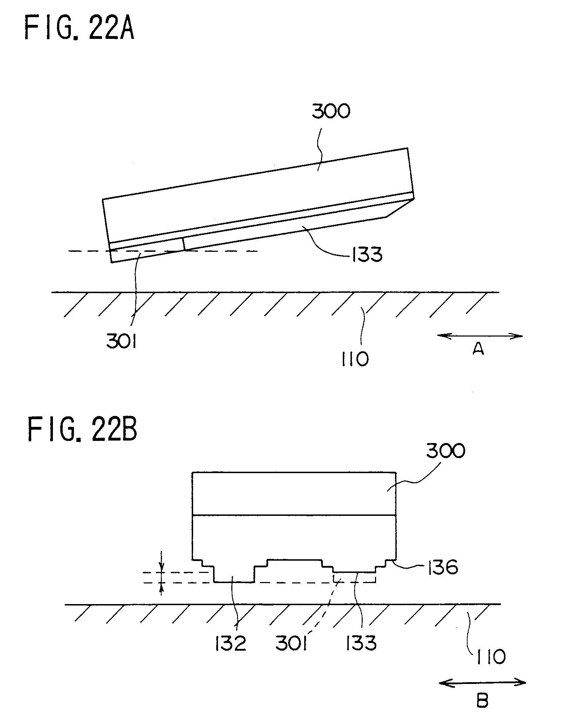

FIG. 22A and FIG. 22B show a sliding condition of the head 300 of the present embodiment over the storage medium 110. FIG. 22A is a view of the head 300 sliding over the medium 110, when viewed in the radial direction "B" of the medium 110 from the outer side of the medium 110 to the inner side of the medium 110. FIG. 22B is a view of the head 300 sliding over the medium 110, when viewed in the rotational direction "A" of the medium 110 from the outlet end surface of the head 300 to the inlet end surface of the head 300.

As described above, in the head 300 of the present embodiment, the height "a" of the inner rail 132 from the reference-height surfaces 134 is set to be equal to the height "b" of the outer rail 133 from the reference-height surfaces 135. The cut-out portion 301 in the outer rail 133 is formed. As shown in FIG. 22B, when the head 300 slides over the medium 110, the head 300 is held substantially in a horizontal condition.

However, in the present embodiment, the inner rail 132 is levitated at a lower position from the medium 110 and the outer rail 133 is levitated at a higher position from the medium 110. As shown in FIG. 22A and FIG. 22B, the lowest position of the outer rail 133 is always higher than the lowest position of the inner rail 132 by the predetermined height (which is, for example, about 10 nm). The length of the cut-out portion 301 in the outer rail 133 is set such that the lowest position of the outer rail 133 is higher than the lowest position of the inner rail 132 by the predetermined height. The predetermined height is slightly larger than the difference between the given levitational height for the CSS zone 120 of the medium 110 and the given levitational height for the data zone 121 of the medium 110.

Accordingly, in the head 300 of this embodiment, the ABS 131 of the inner rail 132 and the ABS 131 of the outer rail 133 are provided in an asymmetric configuration and the outer rail 133 has the cut-out portion 301 at the air-outlet end portion of the outer rail 133, such that the head 300 in a horizontal condition parallel to the rotational direction "A" of the medium 110 to avoid contact with the medium 110 when the head 300 accesses the nearest area of the data zone 121 to the CSS zone 120.

Therefore, when the gap 137 of the head 300 accesses the outermost area of the data zone 121 of the medium 110, the lowest position of the outer rail 133 is slightly higher than the given levitational height for the CSS zone 120 of the medium 110. It is possible for the head 300 of the present embodiment to avoid the problem of contact of the head 300 with the CSS zone 120 of the medium 110 when the head 300 accesses the outermost area of the data zone 121 of the medium 110.

FIG. 23 shows a sliding condition of the head 300 of the present embodiment when accessing the outermost area of the data zone 121 bounded by the CSS zone 120 in the medium 110.

As shown in FIG. 23, when the head 300 slides over the boundary between the data zone 121 and the CSS zone 120 in the medium 110, the lowest position of the outer rail 133 is set to be higher than the lowest position of the inner rail 133 on the bottom of the head 300 by about 10 nm. The difference between the lowest position of the outer rail 133 and the lowest position of the inner rail 132 is appropriately the same as the difference between the given levitational height for the CSS zone 120 of the medium 110 and the given levitational height for the data zone 121 of the medium 110. Therefore, when the head 300 slides over the outermost area of the data zone 121 bounded by the CSS zone 120 in the medium 110, the problem of contact of the head 300 with the CSS zone 120 of the medium 110 is avoided.

Specifically, in the present embodiment, the given levitational height for the CSS zone 120 of the medium 110 is about 35 nm, and the actual levitational height of the outer rail 133 of the head 300 is slightly larger than the given levitational height for the CSS zone 120. Further, in the present embodiment, the given levitational height for the data zone 121 of the medium 110 is about 25 nm, and the actual levitational height of the inner rail 132 of the head 300 is slightly larger than the given levitational height for the data zone 121. The difference between the actual levitational height of the inner rail 132 and the given levitational height for the data zone 121 is appropriate for the gap 137 of the head 300 to read data from or write data to the medium 110. It is possible for the head 300 of the present embodiment to reliably perform the reading or writing of data with the medium 110 at a high output level.

Accordingly, in the head 300 of the present embodiment, when the head accesses the outermost area of the data zone bounded by the CSS zone in the medium, it is possible to reliably perform the reading or writing of data with the medium at a high output level.

In the disk apparatus wherein the storage medium 110 is accessed by the head 300 of the present embodiment, it is possible to provide an increased recording capacity of the storage medium.

Further, the present invention is not limited to the above-described embodiments, and variations and modifications may be made without departing from the scope of the present invention.

**Claims**

1. A head for reading data from and/or writing data to a storage medium wherein the storage medium has a data zone and a contact-start-stop zone, and a given levitational height for the contact-start-stop zone is provided to be larger than a given levitational height for the data zone, said head comprising:

a first air bearing surface (131, 132) provided adjacent to the contact-start-stop zone (2) and extending in a rotational direction (A) of the medium (1) when the head (113, 200, 250) confronts the medium, said first air bearing surface being levitated at a first levitational height above the given levitational height for the contact-start-stop zone when the medium is rotated and the head accesses the data zone (3); and
a second air bearing surface (131, 133) provided apart from the contact-start-stop zone (2) and extending parallel to and spaced apart from said first air bearing surface when the head confronts the medium (1), said second air bearing surface being levitated at a second levitational height above the given levitational height for the data zone (3) when the medium is rotated and the head accesses the data zone,

wherein the first and the second air bearing surfaces (131, 132, 133) are provided in an asymmetric configuration such that the head (113, 200, 250) is held in an inclined condition around a horizontal axis parallel to the rotational direction (A) of the medium (1) to avoid contact with the medium when the head accesses a nearest area of the data zone (3) to the contact-start-stop zone (2).

2. The head according to claim 1, characterized in that the storage medium (1) has the data zone (3) at an outer location of the medium and the contact-start-stop zone (2) at an inner location of the medium, and that the head (113, 200, 250) has an inner rail (132) on which the first air bearing surface (131) is provided and an outer rail (133) on which the second air bearing surface (131) is provided.

3. The head according to claim 2, characterized in that the first air bearing surface (131, 132) has a height with respect to a reference height surface (134) larger than a height of the second air bearing surface (131, 133) with respect to the reference height surface (135).

4. The head according to claim 3, characterized in that the first air bearing surface (131, 132) has a laminated layer (DLC) provided thereon, said laminated layer having a thickness that is substantially equal to a difference in height between the first air bearing surface (131, 132) and the second air bearing surface (131, 133).

5. The head according to claim 2, characterized in that the inner rail (132) has a width in a radial direction (B) of the medium (1) larger than a width of the outer rail (133) in the radial direction of the medium so that the first air bearing surface (131, 132) has a surface area larger than a surface area of the second air bearing surface (131, 133).

6. The head according to claim 1, characterized in that the first air bearing surface (131, 132) has a width in a radial direction (B) of the medium (1) larger than a width of the second air bearing surface (131, 133) in the radial direction of the medium so that the first air bearing surface has a surface area larger than a surface area of the second air bearing surface.

7. A head for reading data from and/or writing data to a storage medium wherein the storage medium has a data zone at an outer location of the medium and a contact-start-stop zone at an inner location of the medium, and a given levitational height for the contact-start-stop zone is provided to be larger than a given levitational height for the data zone, said head comprising:

an inner rail (132) on which a first air bearing surface (131) is provided adjacent to the contact-start-stop zone (2) and extends in a rotational direction (A) of the medium (1) when the head (300) confronts the medium, said first air bearing surface being levitated at a first levitational height above the given levitational height for the contact-start-stop zone when the medium is rotated and the head accesses the data zone (3); and

an outer rail (133) on which a second air bearing surface (131) is provided apart from the contact-start-stop zone (2) and spaced apart from and extends parallel to said first air bearing surface when the head (300) confronts the medium (1), said second air bearing surface being levitated at a second levitational height above the given levitational height for the data zone (3) when the medium is rotated and the head accesses the data zone,

wherein the first and the second air bearing surfaces (131, 132, 133) are provided in an asymmetric configuration, the inner rail (132) having a cut-out portion (301) at an air-outlet end portion of the inner rail, such that the head (300) is held in a horizontal condition parallel to the rotational direction (A) of the medium (1) to avoid contact with the medium when the head accesses a nearest area of the data zone (3) to the contact-start-stop zone (2).

8. The head according to claim 1, characterized in that the storage medium (110) has the data zone (121) at an inner location of the medium and the contact-start-stop zone (120) at an outer location of the medium, and that the head (113, 200, 250) has an inner rail (132) on which the second air bearing surface (131) is provided and an outer rail (133) on which the first air bearing surface (131) is provided.

9. The head according to claim 8, characterized in that the first air bearing surface (131, 133) has a height with respect to a reference height surface (135) larger than a height of the second air bearing surface (131, 132) with respect to the reference height surface (134).

10. The head according to claim 9, characterized in that the first air bearing surface (131, 133) has a laminated layer (DLC) provided thereon, said laminated layer having a thickness that is substantially equal to a difference in height between the first air bearing surface (131, 133) and the second air bearing surface (131, 132).

11. The head according to claim 8, characterized in that the outer rail (133) has a width in a radial direction (B) of the medium (110) larger than a width of the inner rail (132) in the radial direction of the medium so that the first air bearing surface (131, 133) has a surface area larger than a surface area of the second air bearing surface (131, 132).

12. A head for reading data from and/or writing data to a storage medium wherein the storage medium has a data zone at an inner location of the medium and a contact-start-stop zone at an outer location of the medium, and a given levitational height for the contact-start-stop zone is provided to be larger than a given levitational height for the data zone, said head comprising:

an inner rail (132) on which a first air bearing surface (131) is provided apart from the contact-start-stop zone (120) and extends in a rotational direction (A) of the medium (110) when the head (300) confronts the medium, said first air bearing surface being levitated at a first levitational height above the given levitational height for the contact-start-stop zone when the medium is rotated and the head accesses the data zone (121); and

an outer rail (133) on which a second air bearing surface (131) is provided adjacent to the contact-start-stop zone (120) and spaced apart from and extends parallel to said first air bearing surface when the head (300) confronts the medium, said second air bearing surface being levitated at a second levitational height above the given levitational height for the data zone (121) when the medium is rotated and the head accesses the data zone,

wherein the first and the second air bearing surfaces (131, 132, 133) are provided in an asymmetric configuration, the outer rail (133) having a cut-out portion (301) at an air-outlet end portion of the outer rail, such that the head (300) is held in a horizontal condition parallel to the rotational direction (A) of the medium (110) to avoid contact with the medium when the head accesses a nearest area of the data zone (121) to the contact-start-stop zone (120).

13. A disk apparatus having a head for reading data from and/or writing data to a storage medium wherein the storage medium has a data zone and a contact-start-stop zone, and a given levitational height for the contact-start-stop zone is provided to be larger than a given levitational height for the data zone, the head comprising:

a first air bearing surface (131, 132) provided adjacent to the contact-start-stop zone (2) and extending in a rotational direction (A) of the medium (1) when the head (113, 200, 250) confronts the medium, said first air bearing surface being levitated at a first levitational height above the given levitational height for the contact-start-stop zone when the medium is rotated and the head accesses the data zone (3); and

a second air bearing surface (131, 133) provided apart from the contact-start-stop zone (2) and extending parallel to and spaced apart from said first air bearing surface when the head (113, 200, 250) confronts the medium (1), said second air bearing surface being levitated at a second levitational height above the given levitational height for the data zone (3) when the medium is rotated and the head accesses the data zone,

wherein the first and the second air bearing surfaces (131, 132, 133) are provided in an asymmetric configuration such that the head (113, 200, 250) is held in an inclined condition around a horizontal axis parallel to the rotational direction (A) of the medium (1) to avoid contact with the medium when the head accesses a nearest area of the data zone (3) to the contact-start-stop zone (2).

14. The disk apparatus according to claim 13, characterized in that the storage medium (1) has the data zone (3) at an outer location of the medium and the contact-start-stop zone (2) at an inner location of the medium, and that the head (113, 200, 250) has an inner rail (132) on which the first air bearing surface (131) is provided and an outer rail (133) on which the second air bearing surface (131) is provided.

15. The disk apparatus according to claim 14, characterized in that the first air bearing surface (131, 132) has a height with respect to a reference height surface (134) larger than a height of the second air bearing surface (131, 133) with respect to the reference height surface (135).

16. The disk apparatus according to claim 15, characterized in that the first air bearing surface (131, 132) has a laminated layer (DLC) provided thereon, said laminated layer having a thickness that is substantially equal to a difference in height between the first air bearing surface (131, 132) and the second air bearing surface (131, 133).

17. The disk apparatus according to claim 14, characterized in that the inner rail (132) has a width in a radial direction (B) of the medium (1) larger than a width of the outer rail (133) in the radial direction of the medium so that the first air bearing surface (131, 132) has a surface area larger than a surface area of the second air bearing surface (131, 133).

18. The disk apparatus according to claim 13, characterized in that the first air bearing surface (131, 133) has a width in a radial direction (A) of the medium (1) larger than a width of the second air bearing surface (131, 133) in the radial direction of the medium so that the first air bearing surface has a surface area larger than a surface area of the second air bearing surface.

19. A disk apparatus having a head for reading data from and/or writing data to a storage medium wherein the storage medium has a data zone at an outer location of the medium and a contact-start-stop zone at an inner location of the medium, and a given levitational height for the contact-start-stop zone is provided to be larger than a given levitational height for the data zone, said head comprising:

an inner rail (132) on which a first air bearing surface (131) is provided adjacent to the contact-start-stop zone (2) and extends in a rotational direction (A) of the medium (1) when the head (300) confronts the medium, said first air bearing surface being levitated at a first levitational height above the given levitational height for the contact-start-stop zone when the medium is rotated and the head accesses the data zone (3); and
an outer rail (133) on which a second air bearing surface (131) is provided apart from the contact-start-stop zone (2) and spaced apart from and extends parallel to said first air bearing surface when the head (300) confronts the medium (1), said second air bearing surface being levitated at a second levitational height above the given levitational height for the data zone (3) when the medium is rotated and the head accesses the data zone,
wherein the first and the second air bearing surfaces (131, 132, 133) are provided in an asymmetric configuration, the inner rail (132) having a cut-out portion (301) at an air-outlet end portion of the inner rail, such that the head (300) is held in a horizontal condition parallel to the rotational direction (A) of the medium (1) to avoid contact with the medium when the head accesses a nearest area of the data zone (3) to the contact-start-stop zone (2).

20. The disk apparatus according to claim 13, characterized in that the storage medium (110) has the data zone (121) at an inner location of the medium and the contact-start-stop zone (120) at an outer location of the medium, and that the head (113, 200, 250) has an inner rail (132) on which the second air bearing surface (131) is provided and an outer rail (133) on which the first air bearing surface (131) is provided.

21. The disk apparatus according to claim 20, characterized in that the first air bearing surface (131, 133) has a height with respect to a reference height surface (135) larger than a height of the second air bearing surface (131, 132) with respect to the reference height surface (134).

22. The disk apparatus according to claim 21, characterized in that the first air bearing surface (131, 133) has a laminated layer (DLC) provided thereon, said laminated layer having a thickness that is substantially equal to a difference in height between the first air bearing surface (131, 133) and the second air bearing surface (131, 132).

23. The disk apparatus according to claim 20, characterized in that the outer rail (133) has a width in a radial direction (B) of the medium (110) larger than a width of the inner rail (132) in the radial direction of the medium so that the first air bearing surface (131, 133) has a surface area larger than a surface area of the second air bearing surface (131, 132).

24. A disk apparatus having a head for reading data from and/or writing data to a storage medium wherein the storage medium has a data zone at an inner location of the medium and a contact-start-stop zone at an outer location of the medium, and a given levitational height for the contact-start-stop zone is provided to be larger than a given levitational height for the data zone, said head comprising:

an inner rail (132) on which a first air bearing surface (131) is provided apart from the contact-start-stop zone (120) and extends in a rotational direction (A) of the medium (110) when the head (300) confronts the medium, said first air bearing surface being levitated at a first levitational height above the given levitational height for the contact-start-stop zone when the medium is rotated and the head accesses the data zone (121); and
an outer rail (133) on which a second air bearing surface (131) is provided adjacent to the contact-start-stop zone (120) and spaced apart from and extends parallel to said first air bearing surface when the head (300) confronts the medium (110), said second air bearing surface being levitated at a second levitational height above the given levitational height for the data zone (121) when the medium is rotated and the head accesses the data zone,

wherein the first and the second air bearing surfaces (131, 132, 133) are provided in an asymmetric configuration, the outer rail (133) having a cut-out portion (301) at an air-outlet end portion of the outer rail, such that the head (300) is held in a horizontal condition parallel to the rotational direction (A) of the medium (110) to avoid contact with the medium when the head accesses a nearest area of the data zone (121) to the contact-start-stop zone (120).

FIG. 1

# FIG. 2A

W=1.00mm

L = 1.25mm

H = 0.30mm

30% SLIDER

# FIG. 2B

W = 1.60mm

L = 2.00mm

H = 0.43mm

50% SLIDER

FIG. 3A

FIG. 3B

# FIG. 4A

113

133

A

1

# FIG. 4B

113

132

137

133

B

1

# FIG. 5

LEVITATIONAL
HEIGHT

40nm
35nm
30nm
25nm
20nm
15nm

113

INNERMOST
AREA

CSS ZONE          DATA ZONE

# FIG. 6

200

DLC
132
ABS
a c
DLC
134a 134b
134

133
ABS
137
Gap
135a 135b
135
b
A

# FIG. 7

<u>250</u>

# FIG. 8

300

# FIG. 9

FIG. 10A

300

133

301

1

A

FIG. 10B

300

136

132  301  133

1

B

# FIG. 11

# FIG. 12

# FIG. 13

FIG. 14

113

131

132a

133a

133

132

ABS

ABS

A

b

136

135b

135a

135

136

134b

134a

134

137

a

136

FIG. 15A

FIG. 15B

## FIG. 16A

113

133

A

110

## FIG. 16B

113

137

133

132

B

110

# FIG. 17

# FIG. 18

# FIG. 19

250

# FIG. 20

<u>300</u>

# FIG. 21

300

X  DEPTH = 40μm  133

P1

P2

θ = 100 μrad

10nm

301

P0

θ

132

110

A

# FIG. 22A

300

133

301

110

A

# FIG. 22B

300

136

132    301    133

110

B

# FIG. 23

LEVITATIONAL HEIGHT

40nm
35nm
30nm
25nm
20nm
15nm

300
137
301

# FIG. 24 PRIOR ART

3
1
2
B
A

# FIG. 25 PRIOR ART

# FIG. 26 PRIOR ART

# FIG. 27 PRIOR ART

**European Patent Office**

**EUROPEAN SEARCH REPORT**

Application Number

EP 98 10 3430

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 689 198 A (QUANTUM CORP) 27 December 1995<br><br>* abstract; figures 1-3 *<br>* page 4, line 39 - page 6, line 6 *<br>--- | 1,2,5-8, 11-14, 17-20, 23,24 | G11B21/21<br>G11B5/60 |
| X | GB 2 278 485 A (IBM) 30 November 1994<br><br>* abstract; figures 2-3C *<br>* page 6, line 35 - page 9, line 13 *<br>--- | 1,2,7,8, 12-14, 19,20,24 | |
| X | PATENT ABSTRACTS OF JAPAN<br>vol. 010, no. 165 (P-467), 12 June 1986<br>-& JP 61 017278 A (ALPS DENKI KK), 25 January 1986,<br>* abstract; figures 1-6 *<br>--- | 1,2,5,6, 8,9,13, 14,17, 18,20,21 | |
| X | PATENT ABSTRACTS OF JAPAN<br>vol. 016, no. 559 (P-1455), 30 November 1992<br>-& JP 04 214271 A (ALPS ELECTRIC CO LTD), 5 August 1992,<br>* abstract; figures 1-3 *<br>--- | 1,2,5,6, 8,9,13, 14,17, 18,20,21 | TECHNICAL FIELDS SEARCHED (Int.Cl.6)<br><br>G11B |
| X | EP 0 543 690 A (COMMISSARIAT ENERGIE ATOMIQUE) 26 May 1993<br><br>* abstract; figures 7-11 *<br>* column 3, line 1 - column 5, line 54 *<br>--- | 1,2,5,6, 8,9,13, 14,17, 18,20,21 | |
| P,X | US 5 677 812 A (CHA ELLIS T) 14 October 1997<br>* abstract; figures 2-4 *<br>* column 3, line 28 - column 4, line 61 *<br>--- | 1,2,8, 13,14,20 | |
| | -/-- | | |

The present search report has been drawn up for all claims

| Place of search | Date of completion of the search | Examiner |
|---|---|---|
| THE HAGUE | 16 June 1998 | Pariset, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

**EUROPEAN SEARCH REPORT**

Application Number

EP 98 10 3430

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| E | US 5 734 522 A (SHRINKLE LOUIS J) 31 March 1998<br><br>* abstract; figures 1-5 *<br>* column 4, line 14 - line 52 *<br>----- | 1-3,8,9,<br>13-15,<br>20,23 | |

TECHNICAL FIELDS SEARCHED (Int.Cl.6)

The present search report has been drawn up for all claims

| Place of search | Date of completion of the search | Examiner |
|---|---|---|
| THE HAGUE | 16 June 1998 | Pariset, N |

EPO FORM 1503 03.82 (P04C01)